# EUROPEAN PATENT APPLICATION

(11) **EP 4 807 979 A1**
(43) Date of publication of application: **16.09.2026**
(21) Application number: 25162788.1
(22) Date of filing: 11.03.2025
(51) Int. Cl.: H02P 6/32, H02P 21/00, H02P 21/14, H02P 21/20, H02P 21/22, H02P 29/024, H02P 29/032

(54) **EESM CONTROL METHOD**

(71) Applicant: Volvo Truck Corporation, 405 08 Göteborg (SE)
(72) Inventor: JÄGERHAG, Charlie, 417 23 Göteborg (SE)
(74) Representative: Germain Maureau

(57) **Abstract**

A method for field weakening implemented in an electric machine comprising a stator and a rotor with at least one rotor's winding, the method comprising:
- A step of obtaining a field electric current actual value (If) currently applied to the at least one rotor's winding;
- A step of obtaining a direct electric current reference value (Id*);
- A step of determining, based at least on the field electric current actual value (If), a direct electric current offset value to be added to the direct electric current reference value (Id*);
- A step of adding the direct electric current offset value to the direct electric current reference value (Id*) in order to obtain an actualized direct electric current reference value (Id**).

## Description

### TECHNICAL FIELD

The disclosure relates generally to the technical field of Electrical Excited Synchronous Machine (EESM), that can be used in many industries. In particular aspects, the disclosure relates to EESM control methods and control strategies suitable to keep control of the EESM in all circumstances. The disclosure can be applied to heavy-duty vehicles, such as trucks, buses, and construction equipment, among other vehicles. Although the disclosure may be described with respect to a particular vehicle, the disclosure is not restricted to any particular vehicle, and can even be applied to various types of electrical machines.

### BACKGROUND

Permanent Magnet Synchronous Machines (PMSM) have long been a compact and efficient solution for motorization of different kind of devices, such as lifts and electric/hybrid vehicles, that require an electric rotating engine offering high speed coupled with quick start and rapid acceleration.

PMSM comprises a rotor with at least one permanent magnet made of an alloy of iron and neodymium, said rotor being arranged within a stator including a winding electrically supplied with a three-phase current in order to generate a magnetic field interacting with the current induced by the magnetic field created by the permanent magnets so as to provide power to rotate the rotor.

As neodymium is increasingly impacted by both a rise in price and a shortness of supply, due at least in part to geopolitical reasons, there is an interest in the industry to move away from PMSM, and find more cost-effective and sustainable solutions.

Electrically Excited Synchronous Machines (EESM), that use windings as electromagnets (also referred to as temporary magnets, by opposition to permanent magnets) in the rotor instead of permanent magnets for field excitation, have recently gained popularity due in part to their inherent benefits, and the lower price of copper that makes up the windings.

In EESM, the windings of the rotor are magnetized by being directly fed with a field current that can be controlled for ensuring that the EESM operates in a stable way, at its best efficiency and reliability.

In comparison to PMSM for which the current induced by the magnetic field created by the permanent magnets is by nature non-adjustable, EESM offer better Torque per speed ratio and can operate at an almost constant power at high speed.

EESM have low idle losses and no danger of demagnetization, and are also less sensible to high temperature than PMSM, mainly due to copper favorable physical properties. By not relying on rare-earth metals, EESM also have less impact on global warming, and are less subject to price variation.

As such, EESM is now a strong and low-cost alternative to PMSM, offering one more degree of freedom in terms of control of the machine by exercising a direct control on the field current applied to the rotor's windings.

This inherent advantage of EESM is also regarded as a challenge in certain circumstances, especially when the field current applied to the rotor's windings becomes higher than intended, and needs to be immediately reduced in order to avoid the occurrence of a too high magnetic flux through the rotor and the application of a too high induced voltage resulting in a loss of control of the EESM.

However, existing and conventional controlling methods of PMSM include strategies of weakening the field based on voltage references that cannot be efficiently implemented in EESM, since negative voltage cannot be applied nor transferred to the rotor's windings in order to quickly take down the field current's value.

Hence, efficient methods of controlling EESM's are needed, that can deal with situations where the field current applied to the rotor's windings becomes unintentionally too high.

### SUMMARY

According to a first aspect of the disclosure, a method of field weakening implemented in an electric machine comprising a stator and a rotor with at least one rotor's winding, the method comprising:
- A step of obtaining a field electric current actual value;
- A step of obtaining a field electric current reference value;
- A step of obtaining a stator electric currents reference value;
- A step of determining, based at least on the field electric current actual value and the field electric current reference value, a field weakening stator electric currents offset value to be added to the stator electric currents reference value;
- A step of adding the field weakening stator electric currents offset value to the stator electric currents reference value in order to obtain a field weakening actualized stator electric currents reference value.

The first aspect of the disclosure may seek to actualize the stator electric currents reference value in order to take into account the actual and reference values of the field electric current.

A technical benefit may include, thanks to a variation in the stator electric currents reference value, the fact of reducing or suppressing the field induced by a too high value of the field electric current.

Optionally in some examples, including in at least one preferred example, the field weakening method further comprises:
- A step of obtaining a direct electric current reference value, wherein:
- the step of determining the field weakening stator electric currents offset value comprises determining, based at least on the field electric current actual value and the field electric current reference value, a field weakening direct electric current offset value to be added to the direct electric current reference value;
- The step of adding the field weakening stator electric currents offset value to the stator electric currents actual value comprises adding the field weakening direct electric current offset value to the direct electric current reference value in order to obtain a field weakening actualized direct electric current reference value.

A technical benefit may include the fact of reducing or suppressing the field induced by a too high value of the field electric current by increasing the magnitude of the direct electric current instead of trying to reduce the field electric current, which can be complicated due to the impossibility of transferring negative voltage to the at least one rotor's winding.

Optionally in some examples, the field weakening method further comprises:
- A step of obtaining a quadrature electric current reference value, wherein:
- the step of determining the field weakening stator electric currents offset value comprises determining, based at least on the field electric current actual value and the field electric current reference value, a field weakening quadrature electric current offset value to be added to the quadrature electric current reference value;
- The step of adding the field weakening stator electric currents offset value to the stator electric currents actual value comprises adding the field weakening quadrature electric current offset value to the quadrature electric current reference value in order to obtain a field weakening actualized quadrature electric current reference value.

Optionally in some examples, by electric machine we generally refer to a rotating electric machine, or a motor.

Optionally in some examples, the electric machine is an Electrical Excited Synchronous Machine EESM. An EESM comprises a stator and a rotor, both with their own windings for creating magnetic fields: at least one stator's winding for creating a stator magnetic field, and at least one rotor's winding for creating a rotor magnetic field. Usually, a three-phase electric current, or stator electric currents, is applied to the at least one stator's winding, that can be modeled with a direct electric current and a quadrature electric current thanks to the Park-Clarke transform. Also, a field electric current is usually applied to the at least one rotor's winding.

Optionally in some examples, the field electric current actual value corresponds to the measured field electric current that is currently applied to the at least one rotor's winding.

Optionally in some examples, including in at least one preferred example, the field weakening method further comprises a step of comparing the field electric current actual value with the field electric current reference value, wherein determining the field weakening direct electric current offset value is performed based at least on a result of the comparison between the field electric current actual value and the field electric current reference value.

A technical benefit may include the fact that the direct electric current reference value is actualized simply based on a difference between the measured value of the field electric current and the field electric current reference value.

Optionally in some examples, determining the field weakening quadrature electric current offset value is also performed based at least on the result of the comparison between the field electric current actual value and the field electric current reference value.

Optionally in some examples, the step of comparing is performed thanks to a comparison unit, for example thanks to a comparator.

Optionally in some examples, including in at least one preferred example, the field weakening direct electric current offset value is positive when the field electric current actual value is higher than the field electric current reference value.

A technical benefit may include increasing the direct electric current reference value, and thus increasing the direct electric current applied to the at least one stator's winding, in response to an increase of the field electric current.

Optionally in some examples, the field weakening direct electric current offset value is null when the field electric current actual value is lower than the field electric current reference value.

Optionally in some examples, the direct electric current offset value is negative when the field electric current actual value is lower than the field electric current reference value.

Optionally in some examples, including it at least one preferred example, the field weakening method further comprises:
- A step of obtaining a quadrature electric current reference value;
- A step of obtaining a three dimensional, 3D, lookup table comprising at least two triplets associating direct electric current reference values, quadrature electric current reference values and field electric current reference values;
wherein determining the field weakening direct electric current offset value is further performed based on the 3D lookup table, the direct electric current reference value and the quadrature electric current reference value.

Optionally in some examples, including in at least one preferred example, the field weakening method further comprises:
- A step of obtaining a quadrature electric current reference value;
- A step of obtaining a three dimensional, 3D, lookup table comprising at least two triplets associating direct electric current reference values, quadrature electric current reference values and field electric current reference values;
- A step of estimating a direct flux error based on the 3D lookup table, the field electric current actual value, the field electric current reference value, the direct electric current reference value and the quadrature electric current reference value;
wherein determining the field weakening direct electric current offset value is performed based on the estimated direct flux error.

According to a second aspect of the disclosure, a method for controlling an electric machine comprising a stator and a rotor with at least one rotor's winding, the method comprising:
- The steps of the above described field weakening method;
- A step of obtaining a stator electric currents actual value;
- A step of determining, based at least on the stator electric currents actual value and the field weakening actualized stator electric currents reference value, a field weakening stator voltage reference value.

The second aspect of the disclosure may seek to control an electric machine, such as a EESM, by actualizing the stator voltage reference value applied to the electric machine thanks to the field weakening actualized stator electric currents reference value obtained thanks to the above described field weakening method.

A technical benefit may include the fact of controlling the electric machine by compensating any undue and dangerous increase in the field electric current applied to the at least one rotor's winding.

Optionally in some examples, including in at least one preferred example:
- The step of obtaining the stator electric currents actual value comprises obtaining a direct electric current actual value;
- The step of determining the field weakening stator voltage reference value comprises determining, based at least on the direct electric current actual value and the field weakening actualized direct electric current reference value, a field weakening direct voltage reference value.

Optionally in some examples, the direct electric current actual value is obtained based on a measurement of the three-phase electric current, or stator electric currents, applied to the stator of the electric machine and further based on an application of the Park-Clarke transform.

Optionally in some examples, the controlling method further comprises a step of outputting an output signal based on the direct voltage reference value.

Optionally in some examples:
- The step of obtaining the stator electric currents actual value comprises obtaining a quadrature electric current actual value;
- The step of determining the field weakening stator voltage reference value comprises determining, based at least on the quadrature electric current actual value and the field weakening actualized quadrature electric current reference value, a field weakening quadrature voltage reference value.

Optionally in some examples, the quadrature electric current actual value is obtained based on a measurement of the three-phase electric current, or stator electric currents, applied to the stator of the electric machine and further based on an application of the Park-Clarke transform.

Optionally in some examples, including in at least one preferred example, the electric machine control method further comprises:
- A step of obtaining a Torque actual value;
- A step of obtaining a Torque reference value;
- A step of comparing the Torque actual value with the Torque reference value;
- A step of estimating a Torque error based on the comparison between the Torque actual value and the Torque reference value;
- A step of determining a Torque compensation stator electric currents offset value based on the estimated Torque error;
- A step of adding the Torque compensation stator electric currents offset value to the stator electric currents reference value in order to obtain a Torque compensation actualized stator electric currents reference value.

A technical benefit may include allowing the controlling method to take into account and compensate any error in the controlled electric machine Torque value thanks to an actualization of the stator electric currents reference value.

Optionally in some examples, the Torque actual value is a Torque value measured by means of a Torque meter.

Optionally in some examples, the Torque reference value is a Torque requested value, that is a Torque value that should be provided by the electric machine.

Optionally in some examples, including in at least one preferred example, the controlling method further comprises:
- A step of obtaining a quadrature electric current reference value (Iq*), wherein:
- The step of determining the Torque compensation stator electric currents offset value comprises determining, based on the estimated Torque error, a Torque compensation quadrature electric current offset value;
- The step of adding the Torque compensation stator electric currents offset value to the stator electric currents reference value comprises adding the Torque compensation quadrature electric current offset value to the quadrature electric current reference value in order to obtain a Torque compensation actualized quadrature electric current reference value.

Optionally in some examples, including in at least one preferred example, the electric machine control method further comprises:
- A step of obtaining a quadrature electric current actual value;
- A step of determining, based at least on the quadrature electric current actual value and the Torque compensation actualized quadrature electric current reference value, a quadrature voltage reference value. Optionally in some examples, the controlling method further comprises a step of outputting an output signal based on the quadrature voltage reference value.

Optionally in some examples:
- The step of determining the Torque compensation stator electric currents offset value comprises determining, based on the estimated Torque error, a Torque compensation direct electric current offset value;
- The step of adding the Torque compensation stator electric currents offset value to the stator electric currents reference value comprises adding the Torque compensation direct electric current offset value to the field weakening actualized direct electric current reference value in order to obtain a Torque compensation actualized direct electric current reference value.

Optionally in some examples, including in at least one preferred example, the electric machine control method further comprises comprising a step of determining, based at least on the field electric current actual value and the field electric current reference value, a field voltage reference value.

Optionally in some examples, the controlling method further comprises a step of outputting an output signal based on the field voltage reference value.

According to a third aspect of the disclosure, a computer system comprising processing circuitry configured to perform the above-described field weakening method and/or the above-described electric machine controlling method.

According to a fourth aspect of the disclosure, a computer program product comprising program code for performing, when executed by the processing circuitry of the above-described computer system, the above-described field weakening method and/or the above-described electric machine controlling method.

According to a fifth aspect of the disclosure, a non-transitory computer-readable storage medium comprising instructions, which when executed by the processing circuitry of the above-described computer system, cause the processing circuitry to perform the above-described field weakening method and/or the above-described electric vehicle controlling method.

It goes without saying that the different aspects of the disclosure defined above, not incompatible between them, can be combined.

The disclosure will be better understood with the aid of the detailed description that is set out below with reference to the appended drawing.

### BRIEF DESCRIPTION OF THE DRAWINGS

Examples are described in more detail below with reference to the appended drawings.
**FIG.1** is an exemplary algorithm performing an electric machine control method according to one example.
**FIG.2** is an exemplary algorithm performing a field weakening method according to one example.
**FIG.3** is an exemplary algorithm performing an electric machine control method according to another example.
**FIG.4** is an exemplary algorithm performing a field weakening method according to another example.
**FIG5****-****FIG7** represent different scenario simulation results, the three scenarii applying a Torque reference value of 100 Newton-meter (Nm) and a target angular speed of 10000 rotations per minute (rpm) to a PLECS simulation environment simulating a EESM, the first scenario being applied with no field weakening mechanism, the second scenario being applied with a mechanism of field weakening, and the third scenario being applied with both field weakening and Torque compensation mechanism.

More precisely:

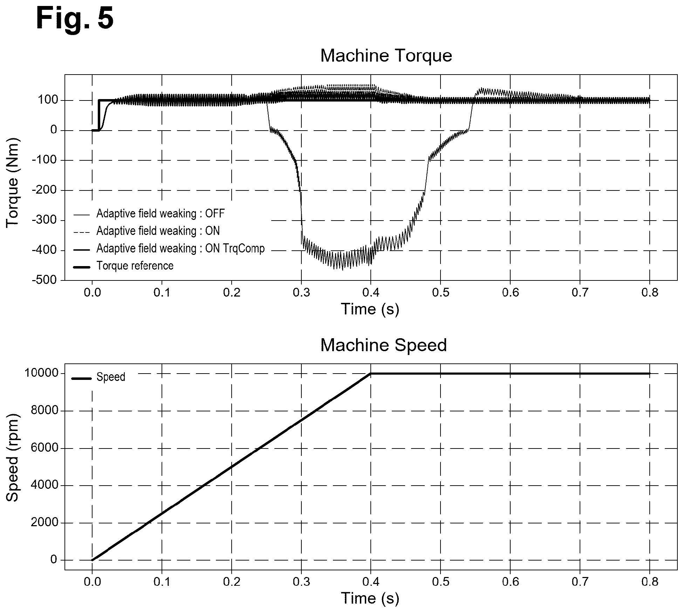

**FIG.5** represents, for the three different scenarii, the evolution of the Torque actual value as a function of the angular speed of the electric machine as the angular speed is quickly reaching its target angular speed of 10000 rpm (at 0,4 second).

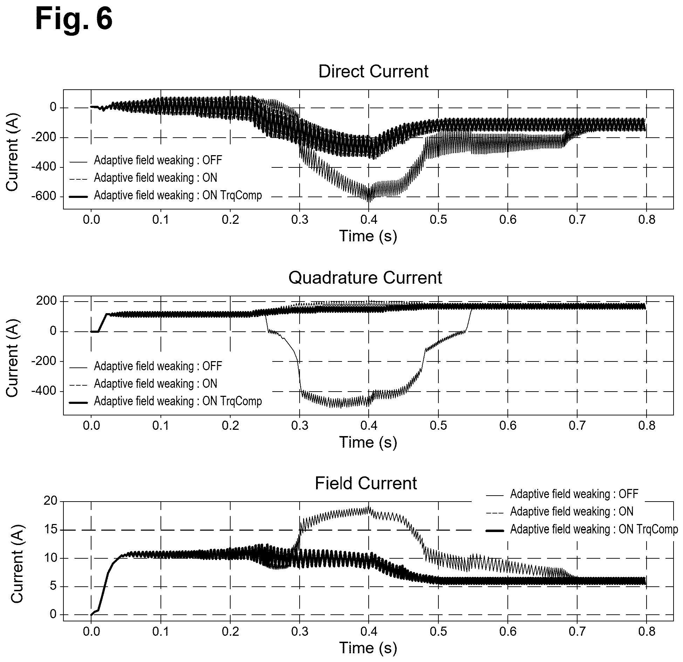

**FIG.6** represents, for the three different scenarii, the evolution of the direct electric current actual value, the evolution of the quadrature electric current actual value and the evolution of the field electric current actual value.

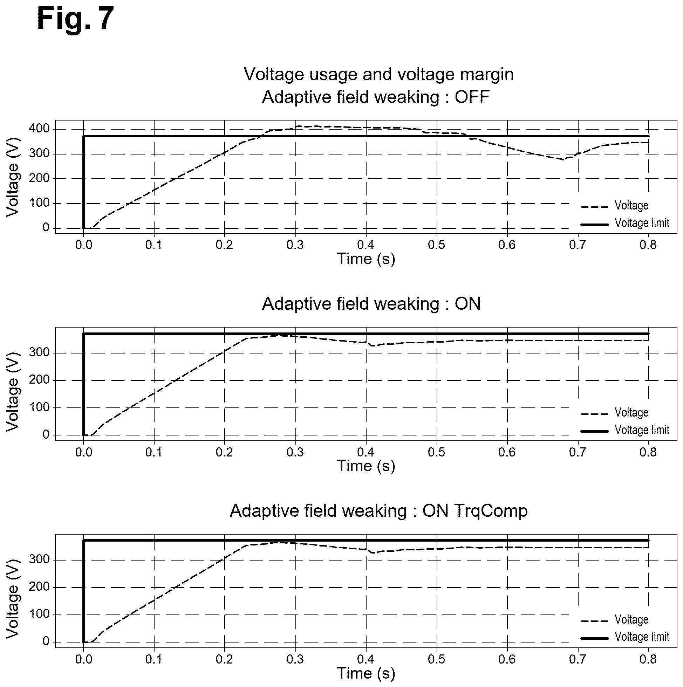

**FIG.7** represents, for the three different scenarii, the evolution of the voltage usage and voltage margin.

### DETAILED DESCRIPTION

The detailed description set forth below provides information and examples of the disclosed technology with sufficient detail to enable those skilled in the art to practice the disclosure.

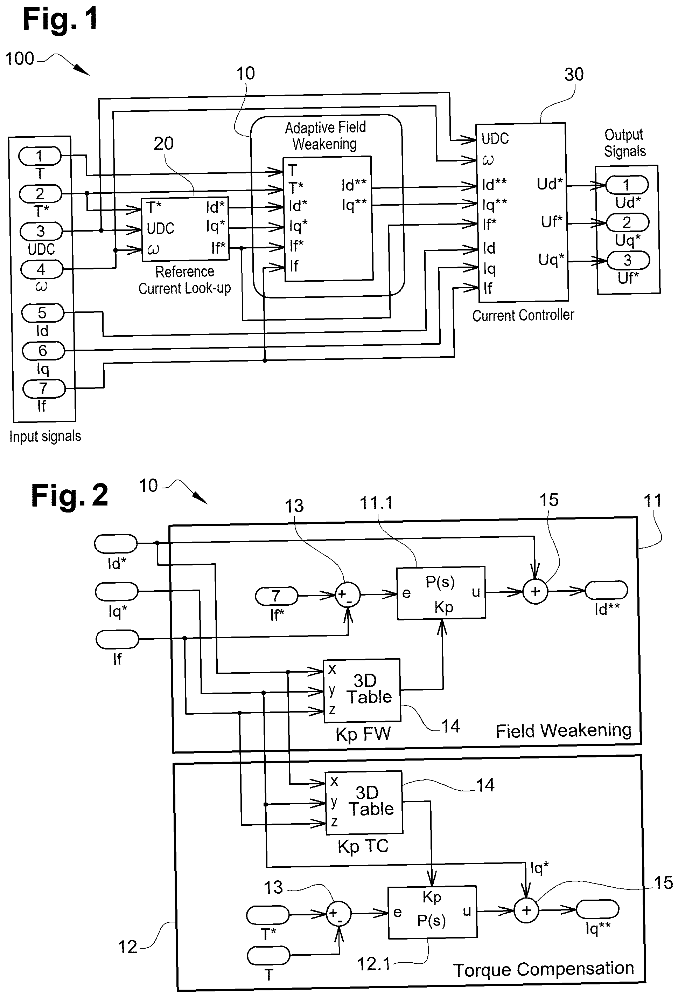

**FIG.1** is an exemplary algorithm performed by an electric machine controller 100, said algorithm implementing a method for controlling an electric machine such as an Electrical Excited Synchronous Machine, EESM.

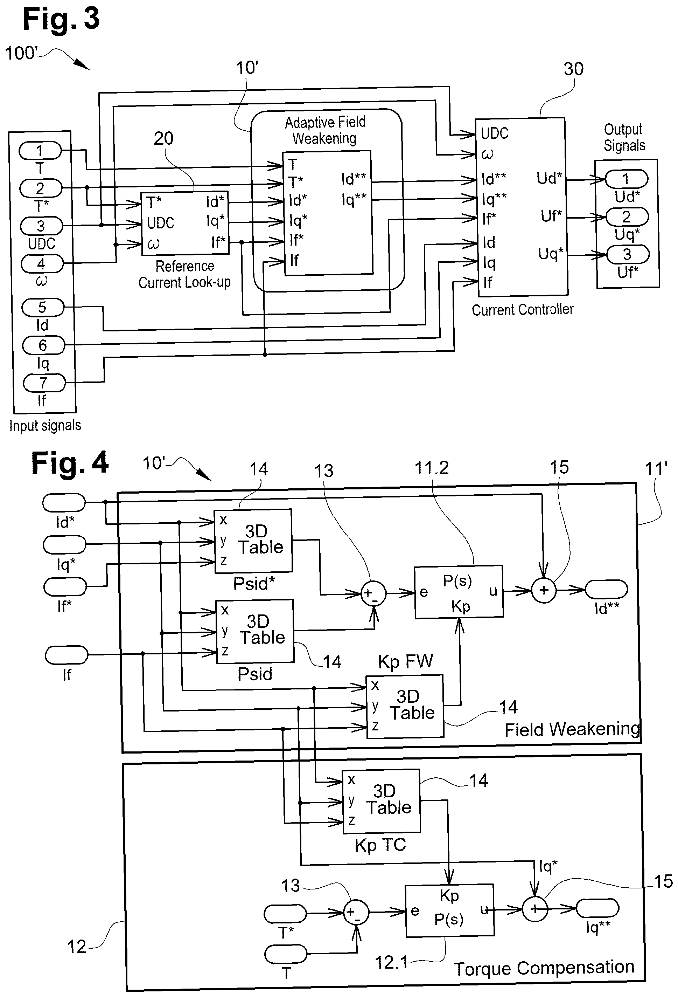

**FIG.3** is another exemplary algorithm performed by an electric machine controller 100', said algorithm implementing a method for controlling an electric machine such as an Electrical Excited Synchronous Machine, EESM.

As will be broadly explained below, the difference between the electric machine controller 100 and the electric machine controller 100' lies mainly in the differences between their respective field weakening units 10 (represented on **FIG.2**),10' (represented on **FIG.4**).

As it is known in the art, a EESM comprises a stator, and a rotor with windings instead of permanent magnets, said rotor's windings being excited/magnetized by a field electric currently directly applied to it, a rotor's magnetic field being induced as a result of this magnetization.

The electric machine control method provides output signals thanks to a current controller 30, said output signals representing a direct voltage reference value Ud*, a quadrature voltage reference value Uq* and a field voltage reference value Uf*, on the basis of input signals representing a Torque actual value T, a Torque reference value T*, a direct current voltage actual value UDC, an angular speed actual value ω, a direct electric current actual value Id, a quadrature electric current actual value Iq and a field electric current actual value If.

The method for controlling an electric machine comprises:
- A step of obtaining the electric machine Torque actual value T, that is the measured Torque value provided by the electric machine, said Torque value being measured for example by a Torque meter;
- A step of obtaining the Torque reference value T*, that is the requested Torque value that should be provided by the electric machine to cover a specific need or requirement;
- A step of obtaining the electric machine direct current voltage actual value UDC, that is the measured DC voltage currently applied to the electric machine;
- A step of obtaining the electric machine angular speed actual value ω, that is the measured angular speed of the rotor of the electric machine;
- A step of obtaining the direct electric current actual value Id, for example by measuring the value of the three-phase electric current, or stator electric currents, applied to the electric machine's stator, and by applying to it the Park-Clarke transform to obtain the corresponding direct electric current actual value Id;
- A step of obtaining the quadrature electric current actual value Iq, for example by measuring the value of the three-phase electric current, or stator electric currents, applied to the electric machine's stator, and by applying to it the Park-Clarke transform to obtain the corresponding quadrature electric current actual value Iq;
- A step of measuring the field electric current actual value If, that is the value of the field electric current applied to the electric machine rotor's windings.

The method for controlling the electric machine further comprises the following steps, performed by a Reference Current look-up unit 20:
- A step of determining a direct electric current reference value Id* on the basis of the Torque reference value T*, the DC voltage actual value UDC and the electric machine angular speed actual value ω;
- A step of determining a quadrature electric current reference value Iq* on the basis of the Torque reference value T*, the DC voltage actual value UDC and the electric machine angular speed actual value ω;
- A step of determining a field electric current reference value If* on the basis of the Torque reference value T*, the DC voltage actual value UDC and the electric machine angular speed actual value ω.

The method for controlling the electric machine further comprises the below described steps of a method of adaptive field weakening that comprises a field weakening method performed by a field weakening unit 11, 11' and a Torque compensation mechanism performed by a Torque compensation unit 12.

Advantageously, the method of field weakening that provides an actualized direct electric current reference value deemed to compensate the rise in field electric current, is followed by a mechanism of Torque compensation that, as will be explained below,

A first example of an adaptive field weakening method, performed thanks to an adaptive field weakening unit 10 comprising the field weakening unit 11 and the Torque compensation unit 12, can be seen on **FIG.2****.**

A second example of an adaptive field weakening method, performed thanks to an exemplary adaptive weakening unit 10' comprising the field weakening unit 11' and the Torque compensation unit 12, can be seen on **FIG.4****.**

As can be seen on **FIG.2** and **FIG.4****,** The first and second examples of the adaptive field weakening method comprises the common following steps, respectively performed by the field weakening unit 11 and by the field weakening unit 11':
- A step of obtaining a field electric current actual value If corresponding to a field electric current currently applied to the at least one rotor's winding;
- A step of obtaining a field electric current reference value If*;
- A step of obtaining a direct electric current reference value Id*;
- A step of determining, based at least on the field electric current actual value If, a direct electric current offset value to be added to the direct electric current reference value Id*;
- A step of adding, performed by an adder 15, the direct electric current offset value to the direct electric current reference value Id* in order to obtain an actualized direct electric current reference value Id**.

The field weakening method, performed by the field weakening unit 11, further comprises a step of comparing, performed by a comparison unit 13 or comparator, the field electric current actual value If with the field electric current reference value If*, the step of determining the direct electric current offset value being performed by a first offset determination unit 11.1 based at least on a result of the comparison between the field electric current actual value If and the field electric current reference value If*.

For example, the direct electric current offset value is positive when the field electric current actual value If is higher than the field electric current reference value If*, and the direct electric current offset value is null when the field electric current actual value If is lower than the field electric current value If*.

The field weakening method, performed by the field weakening unit 11, further comprises:
- A step of obtaining a quadrature electric current reference value Iq*;
- A step of obtaining a three dimensional, 3D, lookup table 14 comprising at least two triplets associating direct electric current reference values x, quadrature electric current reference values y and field electric current reference values z;
the step of determining the direct electric current offset value, performed by the first offset determination unit 11.1, being further performed based on the 3D lookup table 14, the direct electric current reference value Id* and the quadrature electric current reference value Iq*.

The field weakening method, performed by the field weakening unit 11', further comprises:
- A step of obtaining a quadrature electric current reference value Iq*;
- A step of obtaining a three dimensional, 3D, lookup table 14 comprising at least two triplets associating direct electric current reference values x, quadrature electric current reference values y and field electric current reference values z;
- A step of estimating a direct flux error based on the 3D lookup table 14, the field electric current actual value If, the direct electric current reference value Id* and the quadrature electric current reference value Iq*;
wherein the step of determining the direct electric current offset value, performed by the second offset determination unit 11.2, is performed based on the estimated direct flux error.

The electric machine controlling method performed by the electric machine controller 100 comprises:
- the above described steps of the field weakening method performed by the field weakening unit 11;
- A step of obtaining a direct electric current actual value Id;
- A step of determining, performed by the current controller 30 based at least on the direct electric current actual value Id and the actualized direct electric current reference value Id**, a direct voltage reference value Ud*.

The electric machine controlling method performed by the electric machine controller 100' comprises:
- the above described steps of the field weakening method performed by the field weakening unit 11';
- A step of obtaining a direct electric current actual value Id;
- A step of determining, performed by the current controller 30 based at least on the direct electric current actual value Id and the actualized direct electric current reference value Id**, a direct voltage reference value Ud*.

The electric machine controlling method performed by the electric machine controller 100, 100' further comprises the following steps, performed by the Torque compensation unit 12:
- A step of obtaining a quadrature electric current reference value Iq*;
- A step of comparing, performed by a comparison unit 13 or comparator, the Torque actual value T with the Torque reference value T*;
- A step of estimating a Torque error based on the comparison between the Torque actual value T and the Torque reference value T*;
- A step of determining a quadrature electric current offset value performed by a third offset determination unit 12.1 based on the estimated Torque error;
- A step of adding, performed by the adder 15, the quadrature electric current offset value to the quadrature electric current reference value Iq* in order to obtain an actualized quadrature electric current reference value Iq** valuable to compensate the estimated Torque error.

The electric machine controlling method performed by the electric machine controller 100, 100' further comprises the following steps, performed by the current controller 30:
- A step of obtaining a quadrature electric current actual value Iq;
- A step of determining, based at least on the quadrature electric current actual value Iq and the actualized quadrature electric current reference value Iq** obtained by the Torque compensation unit 12, a quadrature voltage reference value Uq*.

The electric machine controlling method performed by the electric machine controller 100, 100' further comprises the following step, performed by the current controller 30:
- A step of determining, based at least on the field electric current actual value If and the field electric current reference value If*, a field voltage reference value Uf*.

FIG.5-FIG.7 illustrate the benefits of both the field weakening and Torque compensation mechanisms. In particular, field weakening mechanism avoids a significant decrease in Torque produced by the EESM when the angular speed of the rotor exceeds 8000 rpm. Also, Torque compensation mechanism avoids an increase of Torque produced by the EESM above the set Torque reference of 100Nm.

Moreover, field weakening mechanism helps avoiding an instability in stator and rotor electric currents when the angular speed of the retor exceeds 8000 rpm.

It is to be understood that the present invention is not limited to the embodiments described above and illustrated in the drawings; Rather, the skilled person will recognize that many changes and modifications may be made within the scope of the appended claims.

## Claims

1. A method of field weakening implemented in an electric machine comprising a stator and a rotor with at least one rotor's winding, the method comprising:
- A step of obtaining a field electric current actual value (If)
- A step of obtaining a field electric current reference value (If*)
- A step of obtaining a stator electric currents reference value;
- A step of determining, based at least on the field electric current actual value (If) and the field electric current reference value (If*),a field weakening stator electric currents offset value to be added to the stator electric currents reference value;
- A step of adding the field weakening stator electric currents offset value to the stator electric currents reference value in order to obtain a field weakening actualized stator electric currents reference value.

2. The field weakening method of claim 1, further comprising:
- A step of obtaining a direct electric current reference value (Id*); wherein:
- the step of determining the field weakening stator electric currents offset value comprises determining, based at least on the field electric current actual value (If) and the field electric current reference value (If*), a field weakening direct electric current offset value to be added to the direct electric current reference value (Id*);
- The step of adding the field weakening stator electric currents offset value to the stator electric currents actual value comprises adding the field weakening direct electric current offset value to the direct electric current reference value (Id*) in order to obtain an actualized direct electric current reference value (Id**).

3. The field weakening method of any of claims 1-2, further comprising a step of comparing the field electric current actual value (If) with the field electric current reference value (If*), wherein determining the field weakening direct electric current offset value is performed based at least on a result of the comparison between the field electric current actual value (If) and the field electric current reference value (If*).

4. The field weakening method of claim 3, wherein the field weakening direct electric current offset value is positive when the field electric current actual value (If) is higher than the field electric current reference value (If*).

5. The field weakening method of any of claims 2-4, further comprising:
- A step of obtaining a quadrature electric current reference value (Iq*);
- A step of obtaining a three dimensional, 3D, lookup table (14) comprising at least two triplets associating direct electric current reference values (x), quadrature electric current reference values (y) and field electric current reference values (z);
wherein determining the field weakening direct electric current offset value is further performed based on the 3D lookup table (14), the direct electric current reference value (Id*) and the quadrature electric current reference value (Iq*).

6. The field weakening method of claim 2, further comprising:
- A step of obtaining a quadrature electric current reference value (Iq*);
- A step of obtaining a three dimensional, 3D, lookup table (14) comprising at least two triplets associating direct electric current reference values (x), quadrature electric current reference values (y) and field electric current reference values (z);
- A step of estimating a direct flux error based on the 3D lookup table, the field electric current actual value (If), the field electric current reference value (If*), the direct electric current reference value (Id*) and the quadrature electric current reference value (lq*);
wherein determining the field weakening direct electric current offset value is performed based on the estimated direct flux error.

7. A method for controlling an electric machine comprising a stator and a rotor with at least one rotor's winding, the method comprising:
- the steps of the field weakening method according to any claims 1-6;
- A step of obtaining a stator electric currents actual value;
- A step of determining, based at least on the stator electric currents actual value and the field weakening actualized stator electric currents reference value, a field weakening stator voltage reference value.

8. The controlling method of claim 7 taken in combination with any of claims 2-6, wherein:
- The step of obtaining the stator electric currents actual value comprises obtaining a direct electric current actual value (Id);
- The step of determining the field weakening stator voltage reference value comprises determining, based at least on the direct electric current actual value (Id) and the field weakening actualized direct electric current reference value (ld**), a field weakening direct voltage reference value (Ud*).

9. The controlling method of any of claims 7-8, further comprising:
- A step of obtaining a Torque actual value (T);
- A step of obtaining a Torque reference value (T*);
- A step of comparing the Torque actual value (T) with the Torque reference value (T*);
- A step of estimating a Torque error based on the comparison between the Torque actual value (T) and the Torque reference value (T*);
- A step of determining a Torque compensation stator electric currents offset value based on the estimated Torque error;
- A step of adding the Torque compensation stator electric currents offset value to the field weakening actualized stator electric currents reference value (Iq*) in order to obtain an Torque compensation actualized stator electric currents reference value.

10. The controlling method of claim 9, further comprising:
- A step of obtaining a quadrature electric current reference value (Iq*), wherein:
- The step of determining the Torque compensation stator electric currents offset value comprises determining, based on the estimated Torque error, a Torque compensation quadrature electric current offset value;
- The step of adding the Torque compensation stator electric currents offset value to the stator electric currents reference value comprises adding the Torque compensation quadrature electric current offset value to the quadrature electric current reference value (Iq*) in order to obtain a Torque compensation actualized quadrature electric current reference value (Iq**).

11. The controlling method of claim 10, further comprising:
- A step of obtaining a quadrature electric current actual value (Iq);
- A step of determining, based at least on the quadrature electric current actual value (Iq) and the Torque compensation actualized quadrature electric current reference value (Iq**), a quadrature voltage reference value (Uq*).

12. The controlling method of any of claims 7-10, further comprising a step of determining, based at least on the field electric current actual value (If) and the field electric current reference value (If*), a field voltage reference value (Uf*).

13. A computer system comprising processing circuitry configured to perform the field weakening method of any of claims 1-6 and/or the controlling method of any of claims 7-12.

14. A computer program product comprising program code for performing, when executed by the processing circuitry of the computer system of claim 13, the field weakening method of any of claims 1-6 and/or the controlling method of any of claims 7-12.

15. A non-transitory computer-readable storage medium comprising instructions, which when executed by the processing circuitry of the computer system of claim 13, cause the processing circuitry to perform the field weakening method of any of claims 1-6 and/or the controlling method of any of claim 7-12.
